# EUROPEAN PATENT SPECIFICATION

(11) **EP 2 592 921 B1**
(45) Date of publication and mention of the grant of the patent: **23.03.2016**
(21) Application number: 11730714.0
(22) Date of filing: 13.07.2011
(51) Int. Cl.: A01D 41/12, F16B 5/00

(54) **GRAIN TANK COVER FOR A COMBINE HARVESTER**
KORNTANKABDECKUNG FÜR EINEN MÄHDRESCHER
COUVERCLE DE BENNE À GRAIN POUR MOISSONNEUSE-BATTEUSE

(30) Priority: 13.07.2010 BE 201000434
(43) Date of publication of application: 22.05.2013
(73) Proprietor: CNH Industrial Belgium nv, 8210 Zedelgem (BE)
(72) Inventor: BOSSUYT, Johnny, B-8820 Torhout (BE); WILLEM, Pieter J.P., B-8470 Gistel (BE)
(74) Representative: CNH Industrial IP Department
(86) International application number: PCT/EP2011/062007
(87) International publication number: WO 2012/007532

(56) References cited:
- EP-A1- 0 058 376
- EP-A1- 1 201 112
- EP-A1- 1 820 383
- EP-A1- 2 020 365
- FR-A1- 2 703 114
- GB-A- 795 737
- JP-A- 8 244 518

## Description

### Field of the invention

The present invention relates to a combine harvested comprising a grain tank provided with a cover.

### Background of the invention

It is known to provide a combine harvester with a cover for the grain tank which when raised can serve as a grain tank extension in order to increase its capacity. Examples of such covers are to be found in EP 1201112 and EP 1486109.

A typical cover, to which the present invention relates, has four or more panels, in particular front and rear end panels and two side panels. Each of the side panels may itself be formed of two separate pivotable sections, as shown for example in EP 1201112.

In the closed position of the grain tank, the two side panels meet and overlap in the middle to cover the grain tank completely. The end panels lie beneath the side panels. A first of the end panels is connected to a hydraulic jack so that it may be raised and lowered, while the second of the end panels is connected to the first through a mechanical linkage, such as a torque tube, so that the end panels are raised and lowered in synchronism.

As the end panels rise, tapering side edges of the end panels force the side panels to rise at the same time and this may be assisted by providing rollers on the end panels and arcuate tracks for the rollers on the side panels. In the fully raised position, the edges of the side and end panels interlock with one another to form a rigid structure capable of holding grain so as to increase the storage capacity of the tank.

The tube through which the grain is delivered to the tank after it has been separated from the remainder of the crop material by the threshing and sieving system of the combine harvester, may have an articulated section that is raised as the tank cover is raised, so as to allow the grain tank to be filled up to its extended height.

If the grain tank cover is to serve as an extension, it is imperative that its four panels be made of a rigid material capable of withstanding the weight of the grain without bending or buckling. In order to achieve this, the four panels may be formed of thick steel plates, but such panels are very heavy and unattractive. If made of thinner steel, it is necessary to strengthen the plates by riveting them to reinforcement bars or to a frame, but this both spoils the appearance of the panels and also makes it difficult to provide smooth guides on the inner surfaces of the side panels to act as tracks for the rollers on the end panels.

### Object of the invention

The present invention seeks therefore to provide a grain tank cover of which the panels are formed of a lightweight material that has sufficient strength to withstand the weight of the grain when the tank is full and that has flat surfaces on both sides both for aesthetic reasons and to permit smooth running of the rollers that are used in raising and lowering the side panels.

### Summary of the invention

In accordance with the present invention, there is provided a combine harvester comprising a grain tank provided with a cover that is capable when raised of acting as a tank extension to increase the storage capacity of the grain tank, the cover comprising side panels and end panels of which the edges interlock when the cover is raised, characterised in that each panel is formed of a plurality of hollow extrusions, each extrusion having a box section with parallel inner and outer walls separated from one another by two or more transversely extending webs, and formations on the side edges of the extrusions to permit each pair of adjacent extrusions to be interlocked with one another along their length.

Preferably, the material from which the extrusions are made comprises aluminium.

Though it would be possible to interlock adjacent extrusions by sliding them into one another from one end, it is preferred to be able to place the adjacent extrusions side by side and to snap them into one another.

In order to avoid the hollow section of each extrusion being exposed at the ends of the panels, it is desirable to provide end caps. In the preferred embodiment of the invention, the end caps of the side panels and the end panels are shaped to interlock with one another when the grain tank cover is in its raised position.

It is further desirable to provide modified extrusions to serve as the edges of the side panels that overlap one another and as the edges that are hinged to the grain tank.

It has been found that, by constructing the panels of a grain tank cover in this manner, the weight of the cover can be reduced significantly at the same time as improving both the aesthetic appearance of the cover and the ease with which the side panels and the end panels can be moved relative to one another as the cover is being raised and lowered.

### Brief description of the drawings

The invention will now be described further, by way of example, with reference to the accompanying drawings, in which:
Figure 1 is a perspective view of a known grain tank cover in a raised position in which it acts as an extension of the grain tank;
Figure 2 is a vertical central section through the grain tank extension of Figure 1;
Figure 3 is a perspective view of a grain tank cover comprising panels made of extrusions according to an embodiment of the invention;
Figure 4 shows a section through an aluminium extrusion used in the panels of Figure 3 in an embodiment of the invention;
Figure 5 shows in section how two extrusions of the kind shown in Figure 4 interlocked with one another to form a rigid structure; and
Figure 6 is a perspective view of the two extrusions in Figure 5 during at a stage in their assembly.

### Detailed description of the preferred embodiment

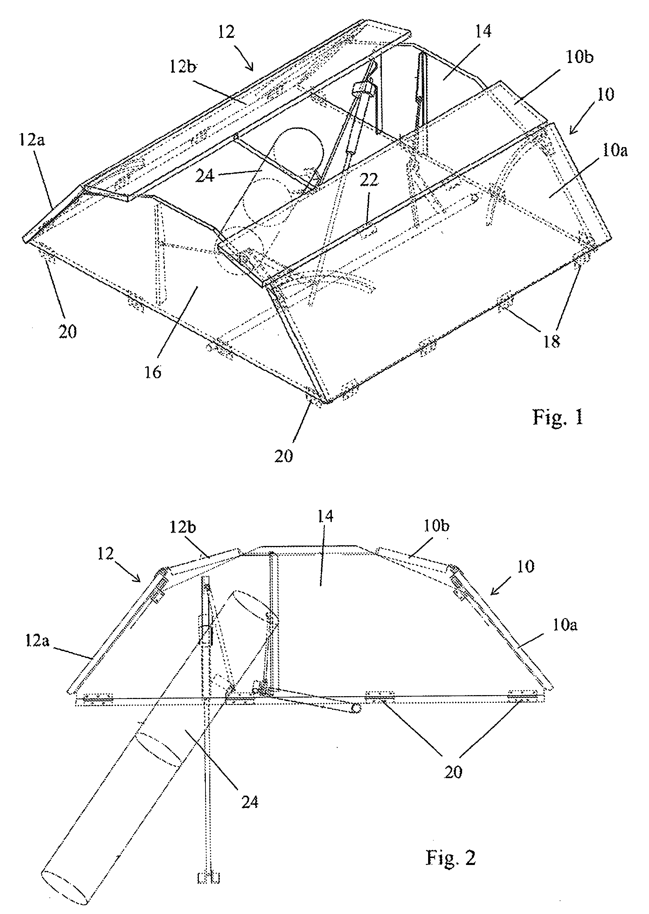

Figures 1 and 2 show a grain tank cover comprising four panels 10, 12, 14 and 16. The side panels 10 and 12 are hinged by means of hinges 18 to two opposite sides of a rectangular opening in the top of the grain tank of an agricultural harvester (not shown) while the front and rear end panels 14 and 16 are hinged to the other two sides of the opening by means of hinges 20. The side panels 10 and 12 in Figures 1 and 2 are each formed of two sections 10a, 10b, and 12a, 12b which are connected to one another by means of hinges 22.

In the closed position of the cover, the end panels 14 and 16 lie horizontally over the opening in the grain tank but they do not fully cover it because of their shape and because they do not meet in the middle. The side panels 10 and 12 close over the panels 14 and 16 and they do meet in the middle so as to close the opening fully and protect the contents of the grain tank from rain. In such a closed position of the cover, the tank has its normal volume and the vehicle can drive on public roads without any risk of it colliding with low bridges or footpaths. The harvester can also be used in this way when harvesting crops, the tank being filled from inside by a so-called bubble-up tube 24. The operator can inspect the grain tank by manually pivoting open the sections 10b and 12b or it is possible to provide a small inspection hatch when the side panels are formed in one piece.

In the raised position illustrated in Figures 1 and 2, the panels all come together to define an extension volume and an extension to the bubble-up tube 24 ensures that the grain tank continues to fill from the top. This allows grain to be stored both in the grain tank and within the extension volume bounded by the panels 10, 12, 14 and 16 thereby increasing its storage capacity.

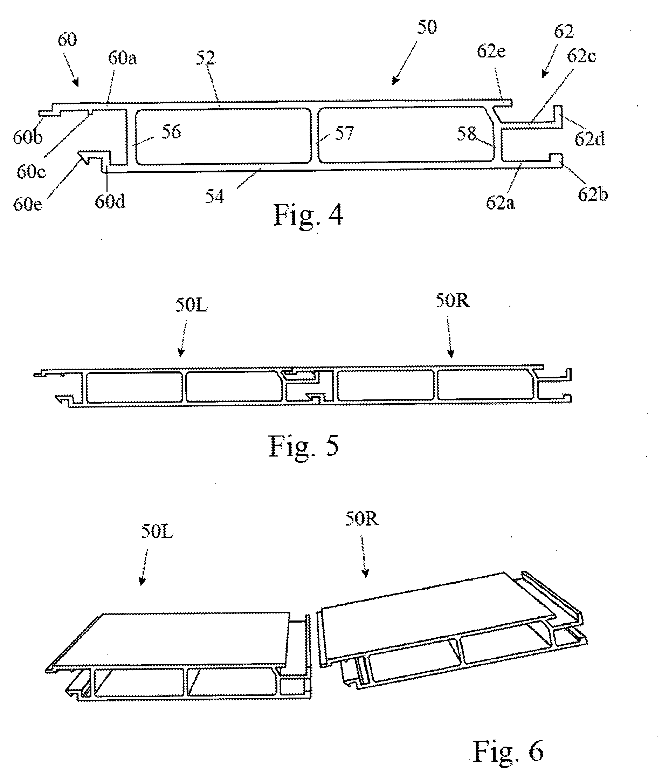

The design and operation of the grain tank extension has been described above to the extent necessary for an understanding of the present invention; it should however be mentioned that Figures 1 and 2 correspond to Figures 5 and 7, respectively, of EP 1201112, which describes these figures in greater detail. In particular, the latter reference describes the mechanism, which comprises rollers on the end panels and arcuate guide rails on the side panels, for raising and lowering the panels, the manner in which the edges of the panels interlock when they are in the raised position, and the manner in which the bubble-up tube 24 is extended as the cover is raised.

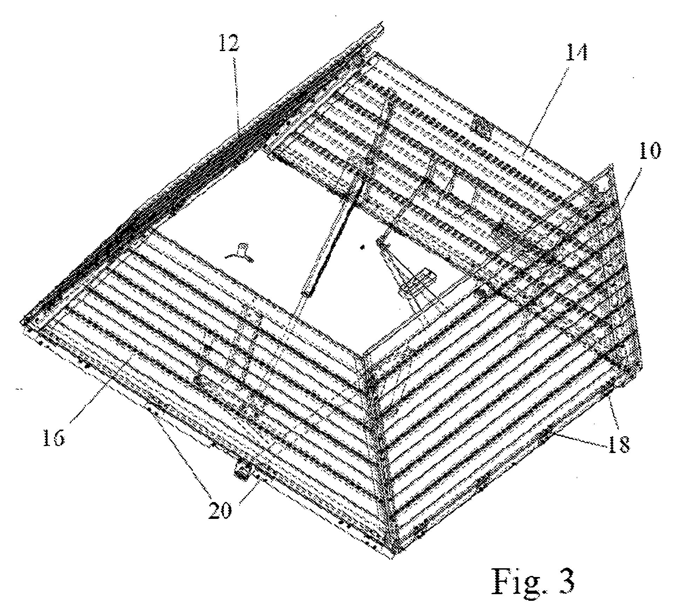

The present invention is not concerned with the design of the grain tank cover as such and is equally applicable to grain tank covers of other designs. The invention is instead concerned with the material from which the panels 10, 12, 14 and 16 of the cover are made. When the panels are made of a lighter material, as proposed in the present invention, it is possible and preferred for the side panels 10 and 12 to be formed in one piece. Such a construction is shown in Figure 3, in which like components have been allocated the same reference numerals as in Figures 1 and 2.

As previously mentioned, it is possible to form each panel from steel of sufficient thickness to provide the necessary strength. However, such panels are very heavy. If the panels are made of sheet steel or aluminium riveted to a support frame, then the rivets and buckling spoil the appearance of the panels.

As shown in Figure 3, the panels in the present invention are made of interlocking extrusions, preferably made of aluminium or an aluminium alloy. The preferred cross-section of the extrusions is shown in Figures 4 to 6. The extrusion 50 is of hollow box section having parallel inner and outer walls 52 and 54, separated from one another by webs 56, 57 and 58. Formations 60 and 62 along the side edges of the extrusions are shaped to allow two similar extrusions to snap fit into one another and, once assembled, the extrusions form a light, strong and attractive panel, which is flat on both sides.

The geometry of the formations 60 and 62, which will now be described in more detail, is preferred because it is easily assembled and extremely robust. Once snap fitted to one another, the extrusions 50 can only be separated by sliding them lengthwise relative to one another and even that can only be achieved by applying extremely high forces. It is however stressed that this extrusion profile is given only by way non-limiting example and that formations of a different shape can be used to achieve a strong interlock between adjacent extrusions.

Such terms as up, down, left and right as used in the ensuing description, all refer to the extrusion as viewed in Figures 3 to 5. The formations 62 on the right side of the extrusion 50 in Figure 3 comprise a lower flange 62a that is coplanar extension of the wall 54 and terminates in an upwardly directed lip 62b. An upper flange 62c, which extends laterally from the web 58 in a direction parallel to the walls 52 and 54, terminates in an upstanding lip 62d. The flange 62c defines an upwardly facing channel, over the left side of which there protrudes an overhang 62e, which is a coplanar extension of the wall 52.

The formations 60 on the left side of the extrusion 50 comprise an upper flange 60a formed as a coplanar extension of the wall 52. The end of the flange 60a is formed with a nose 60b that projects further to the left but is offset from the plane of the wall 52 by an amount equal to the thickness of the wall 52. A rib 60c projects from the underside of the flange 60a. The formations 60 further include a hook-shaped lower flange 60d, which terminates in a ramped surface 60e.

The manner in which the formations 60 and 62 interlock, is clearly shown in Figure 4. In particular, the nose 60b of the extrusion 50R on the right in Figure 4 fits under the overhang 62e of the extrusion 50L on the left to prevent the extrusion 50R from moving upwards. The underside of the flange 60a contacts the upper surface of the lip 62d, and the hook-shaped lower flange 60d fits over the upstanding lip 62b on the lower flange 62a to prevent the extrusion 50R from moving downwards relative to the extrusion 50L. The abutment of the rib 60c against the lip 62d and the fitting of the hook 60d over the lip 62b serve to prevent the extrusions from being pulled apart.

To assemble the extrusions 50R and 60L, the extrusion 50R is tilted upwards. This allows the nose 60b to be slotted beneath the overhang 62e. When a force is then applied to push down on the extrusion 50R to return it to a horizontal position, resistance is encountered as the ramped surface 60e rides over the lip 62b causing a slight deflection of the flange 62a. Once the hooked flange 60d has cleared the lip 62b the two extrusions snap into position and the rib 60c engages behind the lip 62d.

The central sections of the panels 10, 12, 14 and 16 are made of a plurality of identical extrusions, but different extrusions are required for the edges of the panels where they overlap one another and where they are hinged to the grain tank. It will be clear that such end extrusions will have along one edge formations identical with the formations 60 or 62 as described above and along the opposite edge a shape suited to their purpose, such as receiving a hinge or to form an upstanding ledge as a rain barrier where the side panels overlap.

End caps are placed over the ends of the extrusions in order to conceal and close off the open box sections. The end caps are shaped in the manner described in EP 1201112 with reference to the Figures 8 and 9 thereof, so that the edges of the side and end panels interlock with one another when the grain tank cover is raised to achieve an effective seal at the corners of the grain tank extension, as well preventing the side and end panels from splaying apart. The end caps may themselves be formed as aluminium extrusions defining a channel to fit over the exposed ends of the extrusions of each panel and formations projecting from the channel that fit one under the other when the ends of the side panels and the end panels meet in the raised position of the cover.

If desired, as taught in EP 1486109, a blind may be secured to one of the side panels to cover the grain tank when the four panels are raised.

## Claims

1. A combine harvester comprising a grain tank provided with a cover that is capable when raised of acting as a tank extension to increase the storage capacity of the grain tank, the cover comprising side panels (10, 12) and end panels (14, 16) of which the edges interlock when the cover is raised, **characterised in that** each panel (10, 12, 14, 16) is formed of a plurality of hollow extrusions (50), each extrusion having a box section with parallel inner and outer walls (52, 54) separated from one another by two or more transversely extending webs (56, 57, 58), and formations (60, 62) on the side edges of the extrusions (50) to permit each pair of adjacent extrusions to be interlocked with one another along their length.

2. A combine harvester as claimed in claim 1, wherein the material from which the extrusions (50) are made comprises aluminium.

3. A combine harvester as claimed in claim 1 or 2, wherein the formations (60, 62) are shaped to snap fit into one another.

4. A combine harvester as claimed in claim 3, wherein one formation (62) comprises an upwardly directed lip (62d) and the other formation (60) comprises a downwardly projecting rib (60c), disposed for abutment by the lip (62d) of the adjacent extrusion (50L/R).

5. A combine harvester as claimed in claim 4, wherein the upwardly directed lip (62d) is provided on a flange (62c) extending from a web (58) and the downwardly projecting rib (60c) is provided on a flange (60a) formed as a coplanar extension of the inner wall (52).

6. A combine harvester as claimed in any of the claims 3 to 5, wherein one formation (62) comprises an overhang (62e) formed as a coplanar extension of the inner wall (52), and the other formation (60) comprises a nose (60b) provided on a flange (60a) formed as a coplanar extension of the inner wall (52), the nose being disposed for fitting under the overhang (62e) of the adjacent extrusion (50L/R).

7. A combine harvester as claimed in any of the claims 3 to 6, wherein one formation (62) comprises an upstanding lip (62d) and the other formation (60) comprises a hook-shaped flange (60d), terminating in a ramped surface (60e), disposed for fitting over the upstanding lip (62d) of the adjacent extrusion (50L/R).

8. A combine harvester as claimed in claim 7, wherein the upstanding lip (62d) is provided on a flange (62a) formed as a coplanar extension of the outer wall (54).

9. A combine harvester as claimed in any preceding claim, wherein end caps are provided to cover the ends of the extrusion, the end caps being shaped to interlock with one another when the grain tank cover is in the raised position.

10. A combine harvester as claimed in any preceding claim, wherein modified extrusions are provided to serve as the edges of the side panels that overlap one another and as the edges that are hinged to the grain tank.

## Patentansprüche

1. Ein Mähdrescher mit einem Korntank, der mit einer Abdeckung versehen ist, die im angehobenen Zustand als eine Tank-Erweiterung dienen kann, um die Speicherkapazität des Korntanks zu vergrößern, wobei die Abdeckung Seitenplatten (10, 12) und Endplatten (14, 16) umfasst, deren Kanten ineinander greifen, wenn die Abdeckung angehoben wird, **dadurch gekennzeichnet, dass** jede Platte (10, 12, 14, 16) aus einer Vielzahl von hohlen Strangpressteilen (50) gebildet ist, wobei jedes Strangpressteil einen Kasten-Querschnitt mit parallelen inneren und äußeren Wänden (52, 54), die voneinander durch zwei oder mehr sich in Querrichtung erstreckende Stege (56, 57, 58) getrennt sind, und Formationen (60, 62) auf den Seitenkanten der Strangpressteile (50) aufweist, um es jedem Paar von benachbarten Strangpressteilen entlang ihrer Länge verriegelt ineinander zu greifen.

2. Ein Mähdrescher nach Anspruch 1, bei der das Material, aus dem die Strangpressteile (50) hergestellt sind, Aluminium umfasst.

3. Ein Mähdrescher nach Anspruch 1 oder 2, bei dem die Formationen (60, 62) so geformt sind, dass sie einen ineinander einrsten.

4. Ein Mähdrescher nach Anspruch 3, bei dem eine Formation (62) eine nach oben gerichtete Lippe (62d) umfasst, und die andere Formation (60) eine nach unten vorspringende Rippe (60c) umfasst, die für einen Anschlag mit der Lippe (62d) des benachbarten Strangpressteils (50L/R) angeordnet ist.

5. Ein Mähdrescher nach Anspruch 4, bei dem die nach oben gerichtete Lippe (62d) mit einem Flansch (62c) versehen ist, der sich von einem Steg (58) aus erstreckt, und die nach unten vorspringende Rippe (60c) auf einem Flansch (60a) vorgesehen ist, der als eine koplanare Verlängerung der Innenwand (52) gebildet ist.

6. Ein Mähdrescher nach einem der Ansprüche 3 bis 5, bei dem eine Formation (62) einen Überhang (62e) umfasst, der als eine koplanare Verlängerung der Innenwand (52) gebildet ist, und die äußere Formation (60) eine Nase (60b) umfasst, die auf einem Flansch (60a) vorgesehen ist, der als eine koplanare Verlängerung der Innenwand (52) gebildet ist, wobei die Nase zum Einpassen unter den Überhang (62e) eines benachbarten Strangpressteils (50L/R) ausgebildet ist.

7. Ein Mähdrescher nach einem der Ansprüche 3 bis 6, bei dem eine Formation (62) eine aufrechtstehende Lippe (62d) umfasst, und die andere Formation (60) einen hakenförmigen Flansch (60d) umfasst, der in einer rampenförmigen Oberfläche (60e) endet, die zum Einpassen über die aufrechtstehende Lippe (62d) des benachbarten Strangpressteils (50L/R) angeordnet ist.

8. Ein Mähdrescher nach Anspruch 7, bei dem die aufrechtstehende Lippe (62d) auf einem Flansch (62a) vorgesehen ist, der als eine koplanare Verlängerung der Außenwand (54) gebildet ist.

9. Ein Mähdrescher nach einem der vorhergehenden Ansprüche, bei dem Endkappen zum Abdecken der Enden des Strangpressteils vorgesehen sind, wobei die Endkappen so geformt sind, dass sie ineinander greifen, wenn sich die Korntank-Abdeckung in der angehobenen Stellung befindet.

10. Ein Mähdrescher nach einem der vorhergehenden Ansprüche, bei dem modifizierte Strangpressteile vorgesehen sind, die als die Ränder der Seitenplatten, die einander überlappen, und als die Ränder dienen, die gelenkig mit dem Korntank verbunden sind.

## Revendications

1. Moissonneuse-batteuse comprenant un réservoir à grain pourvu d'un couvercle qui, lorsqu'il est relevé, peut servir d'extension du réservoir pour augmenter la capacité de stockage du réservoir à grain, le couvercle comprenant des panneaux latéraux (10, 12) et des panneaux d'extrémité (14, 16) dont les bords s'enclenchent lorsque le couvercle est levé, **caractérisé en ce que** chaque panneau (10, 12, 14, 16) est constitué d'une pluralité d'extrusions creuses (50), chaque extrusion comportant une construction en caisson avec des parois intérieure et extérieure parallèles (52, 54) séparées l'une de l'autre par deux ou plus de flasques s'étendant transversalement (56, 57, 58), et des formes (60, 62) sur les bords latéraux des extrusions (50) pour permettre à chaque paire d'extrusions adjacentes de s'enclencher l'une dans l'autre dans le sens de la longueur.

2. Moissonneuse-batteuse selon la revendication 1, **caractérisée en ce que** le matériau dont les extrusions (50) sont constituées est de l'aluminium.

3. Moissonneuse-batteuse selon la revendication 1 ou 2, **caractérisée en ce que** les formes (60, 62) sont constituées pour s'emboîter l'une dans l'autre.

4. Moissonneuse-batteuse selon la revendication 3, **caractérisée en ce qu'**une forme (62) comprend un rebord dirigé vers le haut (62d) et l'autre forme (60) comprend une nervure en saillie vers le bas (60c), disposée pour venir en butée avec le rebord (62d) de l'extrusion adjacente (50L/R).

5. Moissonneuse-batteuse selon la revendication 4, **caractérisée en ce que** le rebord dirigé vers le haut (62d) est prévu sur une bride (62c) s'étendant depuis un flasque (58) et la nervure en saillie vers le bas (60c) est prévue sur une bride (60a) constituée d'un prolongement coplanaire de la paroi intérieure (52).

6. Moissonneuse-batteuse selon l'une quelconque des revendications 3 à 5, **caractérisée en ce qu'**une forme (62) comprend une saillie (62e) constituée d'un prolongement coplanaire de la paroi intérieure (52), et l'autre forme (60) comprend un bec (60b) prévu sur une bride (60a) formant un prolongement coplanaire de la paroi intérieure (52), le bec étant disposé pour s'emboîter sous la saillie (62e) de l'extrusion adjacente (50L/R).

7. Moissonneuse-batteuse selon l'une quelconque des revendications 3 à 6, **caractérisée en ce qu'**une forme (62) comprend un rebord relevé (62d) et l'autre forme (60) comprend une bride en forme de crochet (60d), se terminant dans une surface inclinée (60e), disposée pour s'emboîter sur le rebord relevé (62d) de l'extrusion adjacente (50L/R).

8. Moissonneuse-batteuse selon la revendication 7, **caractérisée en ce que** le rebord relevé (62d) est mis en place sur une bride (62a) formant un prolongement coplanaire de la paroi extérieure (54).

9. Moissonneuse-batteuse selon l'une quelconque des revendications précédentes, **caractérisée en ce que** des embouts sont prévus pour recouvrir les extrémités de l'extrusion, les embouts étant formés pour s'enclencher l'un dans l'autre lorsque le couvercle du réservoir à grain est dans la position levée.

10. Moissonneuse-batteuse selon l'une quelconque des revendications précédentes, **caractérisée en ce que** des extrusions modifiées sont prévues pour servir de rebords des panneaux latéraux qui se chevauchent l'un dans l'autre et de rebords qui sont articulés au réservoir à grain.
